# EUROPEAN PATENT APPLICATION

(11) **EP 2 955 960 A1**
(43) Date of publication of application: **16.12.2015**
(21) Application number: 13877102.7
(22) Date of filing: 08.03.2013
(51) Int. Cl.: H04W 28/22

(54) **WIRELESS TRANSMISSION METHOD FOR SERVICE DATA, APPARATUS AND DEVICE THEREOF**

(71) Applicant: Huawei Technologies Co., Ltd., Longgang District Shenzhen, Guangdong 518129 (CN)
(72) Inventor: CAO, Mingrong, Shenzhen Guangdong 518129 (CN); HAN, Guanglin, Shenzhen Guangdong 518129 (CN)
(74) Representative: Epping - Hermann - Fischer
(86) International application number: PCT/CN2013/072351
(87) International publication number: WO 2014/134823

(57) **Abstract**

Embodiments of the present invention provide a method and an apparatus for wireless transmission of service data, and a device. The method for wireless transmission of service data provided in the present invention includes: receiving a bandwidth information report sent by a base station, where the bandwidth information report carries a service bandwidth that is admissible to the base station; determining, according to the service bandwidth, service data that matches the service bandwidth; and sending the determined service data to the base station. By using the present invention, a transmission mode of service data can adapt to an unstable bandwidth of a wireless network, and service data that can ensure smooth implementation of a service is identified based on prediction of a capability of a base station, thereby achieving improvement of user experience.

## Description

### TECHNICAL FIELD

Embodiments of the present invention relate to the field of communications technologies, and in particular, to a method and an apparatus for wireless transmission of service data, and a device.

### BACKGROUND

With the continuous development of a mobile network and a mobile service, a video service has an increasingly wider application in a wireless network, and a demand for improvement based on video experience also becomes increasingly urgent.

All existing video optimization technologies perform storage management on a same program source in a multi-bit-rate, multi-format, or multi-segment way or the like. Currently popular live streaming (Live streaming) is that user equipment requests for video segments of different bit rates according to bandwidth estimation, for example, the user equipment may request for video data in a smooth, high definition, or standard definition mode, which is actually to request for transmission of video data at different bit rates.

However, under an unstable wireless network, a change of a network transmission resource causes instability of transmission of video data, and a playback pause often occurs in a live streaming process; therefore, large uncertainty of experience assurance exists.

### SUMMARY

Embodiments of the present invention provide a method and an apparatus for wireless transmission of service data, and a device, so that a transmission mode of service data adapts to an unstable bandwidth of a wireless network, thereby achieving improvement of user experience of a service.

According to a first aspect, an embodiment of the present invention provides a method for wireless transmission of service data, including:
receiving a bandwidth information report sent by a base station, where the bandwidth information report carries a service bandwidth that is admissible to the base station;
determining, according to the service bandwidth, service data that matches the service bandwidth; and
sending the determined service data to the base station.

With reference to the first aspect, in a first possible implementation manner of the first aspect, before the receiving a bandwidth information report sent by a base station, the method further includes:
receiving a message, which indicates whether the bandwidth information report is supported, fed back by the base station.

With reference to the first possible implementation manner of the first aspect, in a second possible implementation manner of the first aspect, before receiving a message, which indicates that the bandwidth information report is supported, fed back by the base station, the method further includes:
sending a bandwidth report capability querying message to the base station.

With reference to the first aspect, in a third possible implementation manner of the first aspect, the determining, according to the service bandwidth, service data that matches the service bandwidth includes:
determining a service bit rate or bit rate range according to the service bandwidth, and determining service data that matches the service bit rate or bit rate range.

With reference to the third possible implementation manner of the first aspect, in a fourth possible implementation manner of the first aspect, before the receiving a bandwidth information report sent by a base station, the method further includes:
selecting candidate service data according to a service data request message sent by user equipment, where the candidate service data includes at least two bit rate versions of the service data.

With reference to the fourth possible implementation manner of the first aspect, in a fifth possible implementation manner of the first aspect, the selecting candidate service data according to a service data request message sent by user equipment includes:
determining whether the service data requested by the service data request message is buffered in a service optimization gateway, and if the service data is not buffered in the service optimization gateway, acquiring the service data from an original server in which the service data is located; and
transcoding the service data acquired from a cache of the service optimization gateway or from the original server into the at least two bit rate versions, and using the at least two bit rate versions as the candidate service data.

With reference to the fourth or fifth possible implementation manner of the first aspect, in a sixth possible implementation manner of the first aspect, after the selecting candidate service data according to a service data request message sent by user equipment, the method further includes:
sending at least one service bandwidth needed by each of the candidate service data to the base station; or
dividing each of the candidate service data into at least two service fragments, and sending service bandwidths needed by the service fragments to the base station.

With reference to the fourth possible implementation manner of the first aspect, in a seventh possible implementation manner of the first aspect, the determining, according to the service bandwidth, service data that matches the service bandwidth includes:
selecting, according to the service bandwidth, from the candidate service data of the at least two bit rate versions of the service data, a bit rate version that matches the service bandwidth and a size of the service data buffered in the current user equipment.

With reference to the first aspect, or any one of the first to the seventh possible implementation manners of the first aspect, in an eighth possible implementation manner of the first aspect, the service data includes: video data or audio data.

According to a second aspect, an embodiment of the present invention provides a method for wireless transmission of service data, including:
sending a bandwidth information report to a service optimization gateway according to load information of a base station, where the bandwidth information report carries a service bandwidth that is admissible to the base station, so that the service optimization gateway determines, according to the service bandwidth, service data that matches the service bandwidth;
receiving the service data, which matches the service bandwidth, sent based on the service bandwidth by the service optimization gateway; and
sending the service data to user equipment.

With reference to the second aspect, in a first possible implementation manner of the second aspect, before the sending a bandwidth information report to a service optimization gateway according to load information of a base station, the method further includes:
receiving a bandwidth report capability querying message sent by the service optimization gateway, where the bandwidth report capability querying message is used to detect whether the base station supports the bandwidth information report.

With reference to the first possible implementation manner of the second aspect, in a second possible implementation manner of the second aspect, after the receiving a bandwidth report capability querying message sent by the service optimization gateway, the method further includes:
feeding back a message indicating whether the base station supports the bandwidth information report to the service optimization gateway.

With reference to the second aspect, in a third possible implementation manner of the second aspect, the sending a bandwidth information report to a service optimization gateway according to load information of a base station includes:
receiving at least one service bandwidth required by the service optimization gateway for sending the service data; and
selecting at least one of the service bandwidth according to the load information of the base station, and feeding back the bandwidth information report that carries the service bandwidth to the service optimization gateway, so that the service optimization gateway sends the service data to the base station based on the service bandwidth.

With reference to the second aspect, or any one of the first to the third possible implementation manners of the second aspect, in a fourth possible implementation manner of the second aspect, the service data includes: video data or audio data.

According to a third aspect, an embodiment of the present invention provides an apparatus for wireless transmission of service data, including:
a report receiving module, configured to receive a bandwidth information report sent by a base station, where the bandwidth information report carries a service bandwidth that is admissible to the base station;
a service data determining module, configured to determine, according to the service bandwidth, service data that matches the service bandwidth; and
a first data sending module, configured to send the determined service data to the base station.

With reference to the third aspect, in a first possible implementation manner of the third aspect, the apparatus further includes:
an indication message receiving module, configured to receive a message, which indicates whether the bandwidth information report is supported, fed back by the base station.

With reference to the first possible implementation manner of the third aspect, in a second possible implementation manner of the third aspect, the apparatus further includes:
a querying message sending module, configured to send, before the indication message receiving module, a bandwidth report capability querying message to the base station, to detect whether the base station supports the bandwidth information report.

With reference to the third aspect, in a third possible implementation manner of the third aspect, the service data determining module is specifically configured to: determine a service bit rate or bit rate range according to the service bandwidth, and determine service data that matches the bit rate or bit rate range.

With reference to the third possible implementation manner of the third aspect, in a fourth possible implementation manner of the third aspect, the apparatus further includes:
a service selecting module, configured to select, before the report receiving module, candidate service data according to a service data request message sent by user equipment, where the candidate service data includes at least two bit rate versions of the service data.

With reference to the fourth possible implementation manner of the third aspect, in a fifth possible implementation manner, the service selecting module includes:
a determining unit, configured to determine whether the service data requested by the service data request message is buffered in a service optimization gateway, and if the service data is not buffered in the service optimization gateway, acquire the service data from an original server in which the service data is located; and
a transcoding unit, configured to transcode the service data acquired from a cache of the service optimization gateway or from the original server into the at least two bit rate versions, and use the at least two bit rate versions as the candidate service data.

With reference to the fourth or the fifth possible implementation manner of the third aspect, in a sixth possible implementation manner of the third aspect, the apparatus further includes:
a bandwidth sending module, configured to send, after the service selecting module, at least one service bandwidth needed by each of the candidate service data to the base station; or
a bandwidth sending module, configured to divide, after the service selecting module, each of the candidate service data into at least two service fragments, and send service bandwidths needed by the service fragments to the base station.

With reference to the fourth possible implementation manner of the third aspect, in a seventh possible implementation manner, the service data determining module is specifically configured to select, according to the service bandwidth, from the candidate service data of the at least two bit rate versions of the service data, a bit rate version that matches the service bandwidth and a size of the service data buffered in the current user equipment.

With reference to the third aspect, or any one of the first to the seventh possible implementation manners of the third aspect, in an eighth possible implementation manner of the third aspect, the service data includes: video data or audio data.

According to a fourth aspect, an embodiment of the present invention provides an apparatus for wireless transmission of service data, including:
a report sending module, configured to send a bandwidth information report to a service optimization gateway according to load information of a base station, where the bandwidth information report carries a service bandwidth that is admissible to the base station, so that the service optimization gateway determines, according to the service bandwidth, service data that matches the service bandwidth;
a first data receiving module, configured to receive the service data, which matches the service bandwidth, sent based on the service bandwidth by the service optimization gateway; and
a second data sending module, configured to send the service data to user equipment.

With reference to the fourth aspect, in a first possible implementation manner of the fourth aspect, the apparatus further includes:
a querying message receiving module, configured to receive, before the report sending module, a bandwidth report capability querying message sent by the service optimization gateway, where the bandwidth report capability querying message is used to detect whether the base station supports the bandwidth information report.

With reference to the first possible implementation manner of the fourth aspect, in a second possible implementation manner of the fourth aspect, the apparatus further includes:
an indication message sending module, configured to feed back, after the querying message receiving module, a message indicating whether the base station supports the bandwidth information report to the service optimization gateway.

With reference to the fourth aspect, in a third possible implementation manner of the fourth aspect, the report sending module includes:
a bandwidth receiving unit, configured to receive at least one service bandwidth required by the service optimization gateway for sending the service data; and
a report sending unit, configured to select at least one of the service bandwidth according to the load information of the base station, and feed back the bandwidth information report that carries the service bandwidth to the service optimization gateway, so that the service optimization gateway sends the service data to the base station based on the service bandwidth.

With reference to the fourth aspect, or any one of the first to the third possible implementation manners of the fourth aspect, in a fifth possible implementation manner of the fourth aspect, the service data includes: video data or audio data.

According to a fifth aspect, an embodiment of the present invention provides a service optimization gateway, including: a processor and a memory, where the memory stores an execution instruction; and when the service optimization gateway runs, the processor communicates with the memory, and the processor executes the execution instruction to enable the service optimization gateway to execute the first aspect, or any one of the first to the eighth possible implementation manners of the first aspect.

According to a sixth aspect, an embodiment of the present invention provides a base station, including: a processor and a memory, where the memory stores an execution instruction; and when the base station runs, the processor communicates with the memory, and the processor executes the execution instruction to enable the base station to execute the second aspect, or any one of the first to the third possible implementation manners of the second aspect.

According to the method, the apparatus and the devices for wireless transmission of service data of the embodiments of the present invention, a base station interacts with a service optimization gateway, and feeds back a service bandwidth of the base station to the service optimization gateway in real time according to load information of the base station, so that the service optimization gateway determines service data that matches the service bandwidth, and smooth implementation of a service is ensured, thereby achieving improvement of user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for wireless transmission of service data according to Embodiment 1 of the present invention;
FIG. 2 is a flowchart of a method for wireless transmission of service data according to Embodiment 2 of the present invention;
FIG. 3 is a flowchart of a method for wireless transmission of service data according to Embodiment 3 of the present invention;
FIG. 4 is a flowchart of a method for wireless transmission of service data according to Embodiment 4 of the present invention;
FIG. 5 is a flowchart of a method for wireless transmission of service data according to Embodiment 5 of the present invention;
FIG. 6 is a flowchart of a method for wireless transmission of service data according to Embodiment 6 of the present invention;
FIG. 7 is a signaling diagram of a method for wireless transmission of service data according to Embodiment 7 of the present invention;
FIG. 8 is a schematic structural diagram of an apparatus for wireless transmission of service data according to Embodiment 8 of the present invention;
FIG. 9 is a schematic structural diagram of an apparatus for wireless transmission of service data according to Embodiment 9 of the present invention;
FIG. 10 is a schematic structural diagram of an apparatus for wireless transmission of service data according to Embodiment 10 of the present invention;
FIG. 11 is a schematic structural diagram of an apparatus for wireless transmission of service data according to Embodiment 11 of the present invention;
FIG. 12 is a schematic structural diagram of a base station according to Embodiment 12 of the present invention; and
FIG. 13 is a schematic structural diagram of a service optimization gateway according to Embodiment 13 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

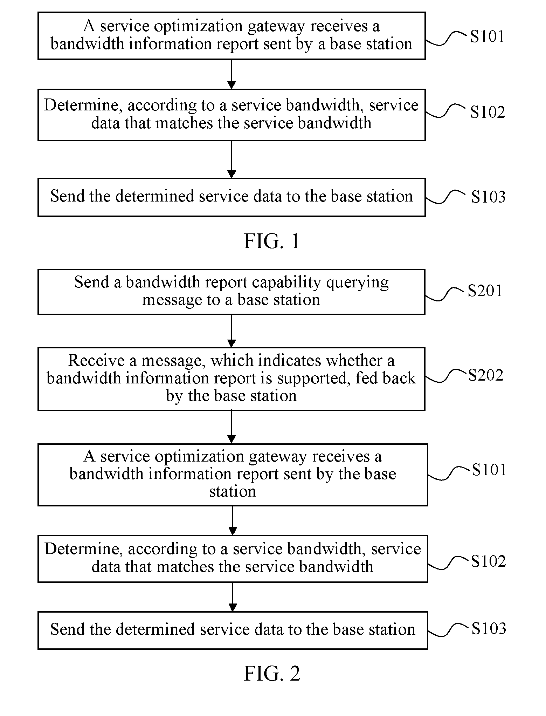

FIG. 1 is a flowchart of a method for wireless transmission of service data according to Embodiment 1 of the present invention. The method is performed by an apparatus, configured in an optimization network, for wireless transmission of service data, where the apparatus is usually implemented by using hardware and/or software, for example, the transmission apparatus may be configured in a service optimization gateway to perform the transmission method. As shown in FIG. 1, the method for wireless transmission of service data of this embodiment may specifically include the followings:

S101: A service optimization gateway receives a bandwidth information report sent by a base station. The bandwidth information report carries a service bandwidth that is admissible to the base station.

The service bandwidth is usually a bandwidth that can be provided by the base station to be used to transmit requested service data, and needs to be determined according to service and a load status of the base station; therefore, the base station needs to report the bandwidth that can be provided by the base station to the service optimization gateway, to implement communication of bandwidth information between the base station and the service optimization gateway, so that a service bandwidth demand predicted by the base station according to a capability of the base station matches a service bandwidth allocated by the service optimization gateway better. Because in the prior art, the bandwidth that can be provided by the base station in the future is predicted according to the requested service data that is received by user equipment within a specific period of time, while the user equipment does not know an actual status of a network, an estimation of the service bandwidth may be erroneous. In this embodiment of the present invention, the base station is required, according to a service rate, to provide a matching service bandwidth. Compared with the prior art in which the user equipment estimates the service bandwidth, the method in this embodiment of the present invention is more accurate. For example, for service data of a type such as video data, a rate may be represented by a bit rate. The bit rate is an amount of data obtained after a video that is displayed for every second is compressed, and is usually in a unit of kilobits per second (kilobits per second, kbps for short).

The base station may be a base station (Base Transceiver Station, BTS for short) in a code division multiple access (Code Division Multiple Access, CDMA for short) system, or may be a base station (NodeB) in a wideband code division multiple access (Wideband Code Division Multiple Access, WCDMA for short) system, or may be an evolved base station (Evolutional Node B, eNB or eNodeB for short) in a long term evolution (Long Term Evolution, LTE for short) system, which is not limited in the present invention.

S102: Determine, according to the service bandwidth, service data that matches the service bandwidth.

In the prior art, selection of the requested service data is completed by the user equipment, while in this embodiment of the present invention, the service optimization gateway determines, according to load information of the base station or the like, the service data that matches the service bandwidth, and automatically adjusts a bit rate of the service data to adapt to the service bandwidth.

S103: Send the determined service data to the base station.

In this embodiment, a service optimization gateway is deployed on a network side, to provide requested service data, and a base station identifies, according to prediction of a capability of the base station, the service data that can ensure smooth implementation of a service, for example, for a video service, a video playback pause caused when there is excessively little content in a buffer of user equipment during a video playback process can be avoided, thereby achieving improvement of user experience of a service.

### Embodiment 2

FIG. 2 is a flowchart of a method for wireless transmission of service data according to Embodiment 2 of the present invention. In this embodiment, on a basis of the foregoing embodiment before S101 in which the service optimization gateway receives the bandwidth information report sent by the base station, the method may further include the following steps:

S201: The service optimization gateway sends a bandwidth report capability querying message to the base station. The bandwidth report capability querying message is used to detect whether the base station supports the bandwidth information report.

S202: The service optimization gateway receives a message, which indicates whether the bandwidth information report is supported, fed back by the base station.

Specifically, when the service optimization gateway does not determine whether the base station supports a method of the bandwidth information report provided in the present invention, the service optimization gateway may query for a bandwidth report capability of the base station in a manner of sending the bandwidth report capability querying message. An indication message may be classified into a message indicating that the bandwidth information report is supported and a message indicating that the bandwidth information report is not supported. After the base station receives the bandwidth report capability querying message, if the bandwidth information report is supported, the base station sends the message indicating that the bandwidth information report is supported to the service optimization gateway; otherwise, the base station sends the message indicating that the bandwidth information report is not supported or an exception indication message to the service optimization gateway.

In this embodiment, it is first detected whether a base station supports a bandwidth information report capability, and a bandwidth capability of the base station is negotiated between the base station and a service optimization gateway, so that it is avoided that the method for wireless transmission of service data provided in the present invention is still performed continuously when the base station does not support the bandwidth information report capability, and a waste of time is avoided during a wireless transmission process.

### Embodiment 3

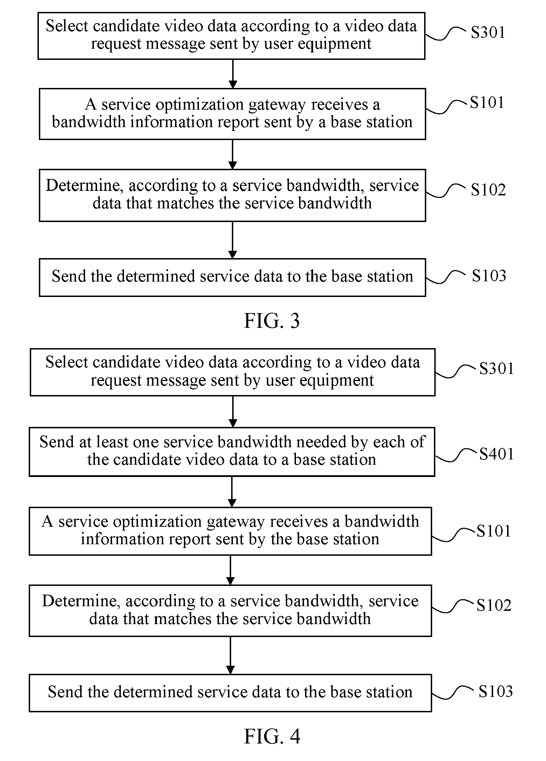

FIG. 3 is a flowchart of a method for wireless transmission of service data according to Embodiment 3 of the present invention. As shown in FIG. 3, on a basis of the foregoing embodiments, this embodiment is described by using an example in which video data is used as the service data, where a service optimization gateway may be specifically a video optimization gateway.

Preferably, before S101 in which the service optimization gateway receives the bandwidth information report sent by the base station, the method may further include the following step:

S301: The service optimization gateway selects candidate video data according to a video data request message sent by user equipment, where the candidate video data includes at least two bit rate versions of requested video data.

Specifically, in this embodiment, S102 in which the service data that matches the service bandwidth is determined according to the service bandwidth includes: determining a service bit rate or bit rate range according to the service bandwidth, and determining service data that matches the service bit rate or bit rate range. It is determined whether the requested video data requested by the video data request message is buffered in the video optimization gateway, and if the video data is not buffered in the video optimization gateway, the requested video data is acquired from an original server in which the requested video data is located; in addition, the requested video data acquired from a cache of the video optimization gateway or from the original server may be further transcoded into videos of the at least two bit rate versions and the at least two bit rate versions are used as the candidate video data. The candidate video data may be represented in a form of a video list. A bit rate of the requested video data is determined according to the service bandwidth, that is, the bit rate of the requested video data may be selected and determined from candidate video data of multiple bit rate versions; alternatively, after the service bandwidth is determined, transcoding may also be performed then to generate the requested video data having a matching bit rate.

The determining the service bit rate or bit rate range of the requested video data according to the service bandwidth includes: selecting, according to the service bandwidth from the candidate video data of the at least two bit rate versions of the requested video data, a bit rate version that matches the service bandwidth and a size of the requested video data buffered in the current user equipment. For example, the service bandwidth is 500 kbps, while an initial bit rate of the requested video data is 800 kbps. In this case, bit rate versions such as 400 kbps, 500 kbps, 600 kbps, and the like may be generated through the transcoding, and then a suitable bit rate version is selected according to an amount of content in a buffer of the user equipment. For example, if one megabit of the requested video data has already been stored in the content in the buffer of the user equipment, a version of the requested video data having a bit rate greater than the current service bandwidth may be selected, such as 600 kbps; or if the requested video data that has already been stored in the content in the buffer of the user equipment is almost of zero bit, a version of the requested video data having a bit rate not greater than the current service bandwidth is selected, such as 400 kbps, so that smooth playback of the requested video is ensured.

### Embodiment 4

FIG. 4 is a flowchart of a method for wireless transmission of service data according to Embodiment 4 of the present invention. In this embodiment, on a basis of the foregoing technical solutions, and this embodiment is described by still using an example in which video data is used as the service data, where a service optimization gateway may be specifically a video optimization gateway. After S301 in which the candidate video data is selected according to the video data request message sent by the user equipment, the method further includes:

S401: Send at least one service bandwidth needed by each of the candidate video data to a base station.

Specifically, this step may be also replaced as: dividing each of the candidate video data into at least two video fragments, that is, the candidate video data of at least one bit rate version may be further divided into multiple video segments, and sending service bandwidths needed by the video fragments to the base station. The at least one service bandwidth refers to that the requested video data may have multiple bit rate versions, and each of the bit rate versions corresponds to a different service bandwidth demand, and therefore, there is at least one service bandwidth, so that it is further ensured that a pause does not occur during a playback process of the requested video data.

In any one of the embodiments described above, the service data may be video data, or may be service data such as audio data, which is not limited in the present invention.

### Embodiment 5

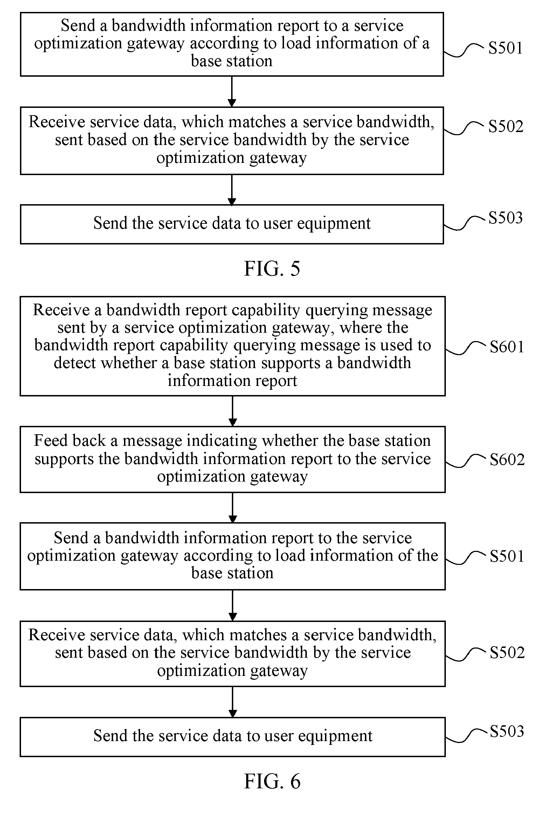

FIG. 5 is a flowchart of a method for wireless transmission of service data according to Embodiment 5 of the present invention. The method is performed by an apparatus, configured in a base station, for wireless transmission of service data, where the apparatus is usually implemented by using hardware and/or software. As shown in FIG. 5, the method for wireless transmission of service data of this embodiment may specifically include the followings:

S501: Send a bandwidth information report to a service optimization gateway according to load information of a base station, where the bandwidth information report carries a service bandwidth that is admissible to the base station, so that the service optimization gateway determines, according to the service bandwidth, service data that matches the service bandwidth.

In this embodiment of the present invention, the base station is required, according to a service rate, to provide a matching service bandwidth. Compared with the prior art in which user equipment estimates the service bandwidth, the method in this embodiment of the present invention is more accurate.

S502: Receive service data, which matches the service bandwidth, sent based on the service bandwidth by the service optimization gateway.

S503: Send the service data to user equipment.

In this embodiment, a base station determines an admissible service bandwidth according to prediction of a capability of the base station, and provides to a service optimization gateway; and the service optimization gateway delivers matching service data, so that smooth implementation of a service is ensured, for example, a video playback pause caused when there is excessively little content in a buffer of user equipment during a video playback process can be avoided, thereby achieving improvement of user experience of a service.

### Embodiment 6

FIG. 6 is a flowchart of a method for wireless transmission of service data according to Embodiment 6 of the present invention. On a basis of the foregoing technical solution, optionally, before S501 in which the bandwidth information report is sent to the service optimization gateway according to the load information of the base station, the method may further include:

S601: Receive a bandwidth report capability querying message sent by the service optimization gateway, where the bandwidth report capability querying message is used to detect whether the base station supports the bandwidth information report.

S602: Feed back a message indicating whether the base station supports the bandwidth information report to the service optimization gateway.

Specifically, when the service optimization gateway does not determine whether the base station supports a method of the bandwidth information report provided in the present invention, the service optimization gateway may query for a bandwidth report capability of the base station in a manner of sending the bandwidth report capability querying message. An indication message may be classified into a message indicating that the bandwidth information report is supported and a message indicating that the bandwidth information report is not supported. After the base station receives the bandwidth report capability querying message, if the bandwidth information report is supported, the base station sends the message indicating that the bandwidth information report is supported to the service optimization gateway; otherwise, the base station sends the message indicating that the bandwidth information report is not supported to the service optimization gateway.

In this embodiment, it is first detected whether a base station supports a bandwidth information report capability, and a bandwidth capability of the base station is negotiated between the base station and a service optimization gateway, so that it is avoided that the method for wireless transmission of service data provided in the present invention is still performed continuously when the base station does not support the bandwidth information report capability, and a waste of time is avoided during a wireless transmission process.

On a basis of the foregoing technical solution, preferably, S501 in which the bandwidth information report is sent to the service optimization gateway according to the load information of the base station includes the followings:

a. Receive at least one service bandwidth required by the service optimization gateway for sending the service data.

b. Select at least one of the service bandwidth according to the load information of the base station, and feed back the bandwidth information report that carries the service bandwidth to the service optimization gateway, so that the service optimization gateway sends the service data to the base station based on the service bandwidth.

By using video data as an example, after an operation such as transcoding or fragmentation is performed on the requested video data on a side of the service optimization gateway, the requested video data may correspond to multiple service bandwidths. In this case, the base station needs to select, according to the load information of the base station, the service bandwidth for transmitting the requested video data, carry the one or more service bandwidths in the bandwidth information report, and send to the service optimization gateway. In this technical solution, a selection range of the service bandwidth needed to transmit the requested video data is increased, further ensuring smooth playback of a video.

### Embodiment 7

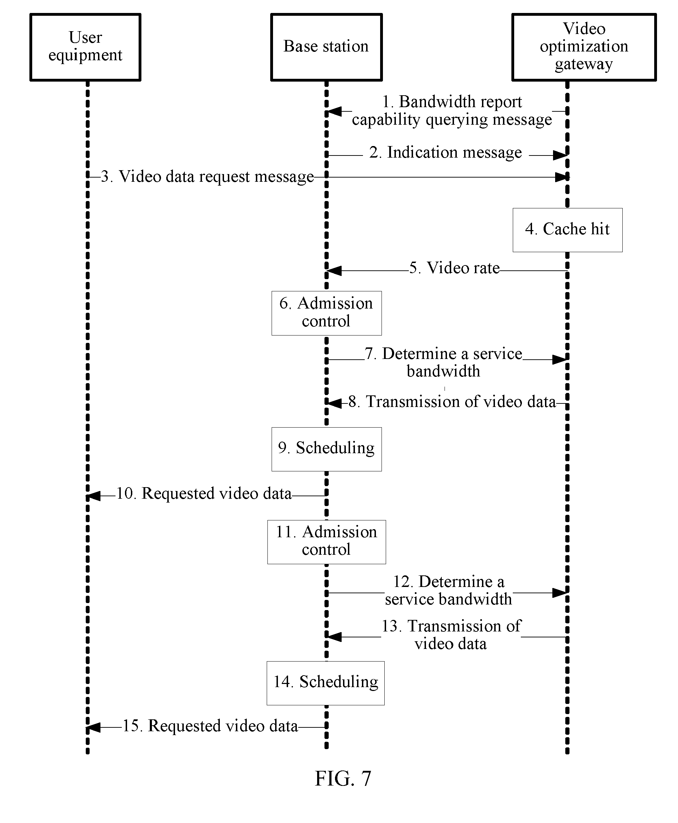

FIG. 7 is a signaling diagram of a method for wireless transmission of service data according to Embodiment 7 of the present invention. As shown in FIG. 7, in a method for wireless transmission of sensing a service rate provided in the present invention, signaling interaction is performed among user equipment, a base station, and a service optimization gateway, to complete transmission of service data. In this embodiment, video data is used as an example for description, and the service optimization gateway may be a video optimization gateway. A specific implementation process is as follows:

Step 1: The video optimization gateway sends a bandwidth report capability querying message to the base station.

Specifically, before the video optimization gateway cannot determine whether the base station supports a method of the bandwidth information report, the video optimization gateway queries a wireless network device for a bandwidth report capability of the base station, that is, queries whether the base station supports the method of the bandwidth information report protected by the present invention.

Step 2: The base station sends an indication message to the video optimization gateway.

Specifically, the base station receives the bandwidth report capability querying message, and if the bandwidth information report is supported, the base station sends a message indicating that the bandwidth information report is supported to the video optimization gateway; otherwise, the base station sends a message indicating that the bandwidth information report is not supported to the video optimization gateway.

Step 1 and step 2 are a process for negotiating a bandwidth capability, and are optional steps. Step 3 may be directly performed.

Step 3: The user equipment sends a video data request message to the video optimization gateway.

Specifically, the user equipment sends the video data request message to the video optimization gateway.

Step 4: There is a cache hit in the video optimization gateway.

Specifically, the video optimization gateway selects candidate video data according to video data stored or acquired by the video optimization gateway and the received video data request message, where the candidate video data may be different bit rate versions that correspond to the requested video data requested by the user equipment, and may be represented in a form of a video list.

The video optimization gateway may have a caching function. In this step, the video optimization gateway determines whether the requested video data requested by the user equipment has already been buffered in the video optimization gateway; and if the video data is not buffered in the video optimization gateway, the video optimization gateway acquires from an original server in which the requested video data is located.

The video optimization gateway may have a function of transcoding, to transcode the requested video data acquired from a cache or from the original server into video data of multiple different bit rate versions.

Step 5: The video optimization gateway feeds back a video rate to the base station.

Specifically, the video optimization gateway sends a bandwidth information report needed by the requested video data to the base station, where the bandwidth information report may include a service bandwidth needed by the requested video data that is to be transmitted to the user equipment. The video optimization gateway may also send a bandwidth information report that includes multiple service bandwidths and corresponds to the requested video data to the base station, because if the requested video data has multiple bit rate versions, each bit rate version corresponds to a different service bandwidth. The rate and the bit rate may be considered to be equivalent in the present invention.

Optionally, the video optimization gateway may divide the requested video data into multiple video segments, and for a video segment to be transmitted, the video optimization gateway sends a service bandwidth needed by the video fragment to the base station.

Steps 3 to 5 are a process for requesting a service bandwidth of a candidate video, and step 5 is an optional step. Step 6 may be also directly performed after step 4.

Step 6: The base station performs admission control.

Specifically, the base station determines an admissible service bandwidth according to the load information of the base station, and sends a bandwidth information report to the video optimization gateway.

If the base station receives at least one service bandwidth sent by the video optimization gateway, the base station performs the admission control on the service bandwidth that is from a network side, and if the base station can admit the at least one service bandwidth sent by the video optimization gateway, the base station sends the bandwidth information report that carries the service bandwidth to the video optimization gateway.

Step 7: The base station confirms a service bandwidth, and feeds back to the video optimization gateway.

Specifically, the base station reports the service bandwidth that is admissible to the base station to the video optimization gateway. For example, the admissible service bandwidth may be 500 kbps.

Step 6 and step 7 are a process for reporting the admissible service bandwidth.

Step 8: The video optimization gateway sends and transmits video data to the base station.

Specifically, the video optimization gateway sends, according to the admissible service bandwidth reported by the base station, to the base station, the requested video data that can be transmitted on the admissible service bandwidth. For example, the video optimization gateway selects and sends the requested video data or video fragment having a bit rate of 500 kbps.

Step 9: The base station schedules a data packet.

Specifically, the base station schedules the data packet that needs to be transmitted, that is, the requested video data or video fragment having a bit rate of 500 kbps, to the user equipment.

Step 10: The base station delivers the requested video data to the user equipment.

Specifically, the base station delivers the requested video data, that is, the requested video data or video fragment having a bit rate of 500 kbps in step 9, to the user equipment.

Step 11: The base station performs admission control.

Specifically, the base station performs estimation of an admissible service bandwidth, and estimates a service bandwidth that is admissible subsequently.

Step 12: The base station confirms a service bandwidth, and feeds back to the video optimization gateway.

Specifically, if the service bandwidth that is admissible to the base station changes, the base station may send and report an updated admissible service bandwidth to the video optimization gateway, for example, the updated admissible service bandwidth may be 800 kbps.

Step 13: The video optimization gateway sends and transmits video data to the base station.

Step 14: The base station schedules a data packet.

Step 15: The base station delivers the requested video data to the user equipment.

-Operations performed in steps 13 to 15 are the same as those in steps 8 to 10, and a difference lies only in that the requested video data or video fragment having a bit rate of 800 kbps is indicated and delivered.

Steps 5 to 15 are repeated until all the requested video data is sent to the user equipment.

According to the method for wireless transmission of service data provided in this embodiment of the present invention, a video optimization gateway is deployed on a network side, to provide requested video data; a base station identifies, according to prediction of a capability of the base station, the requested video data that can ensure smooth playback, and a video playback pause caused when there is excessively little content in a buffer of user equipment during a video playback process is avoided, thereby achieving improvement of user experience of a video service.

### Embodiment 8

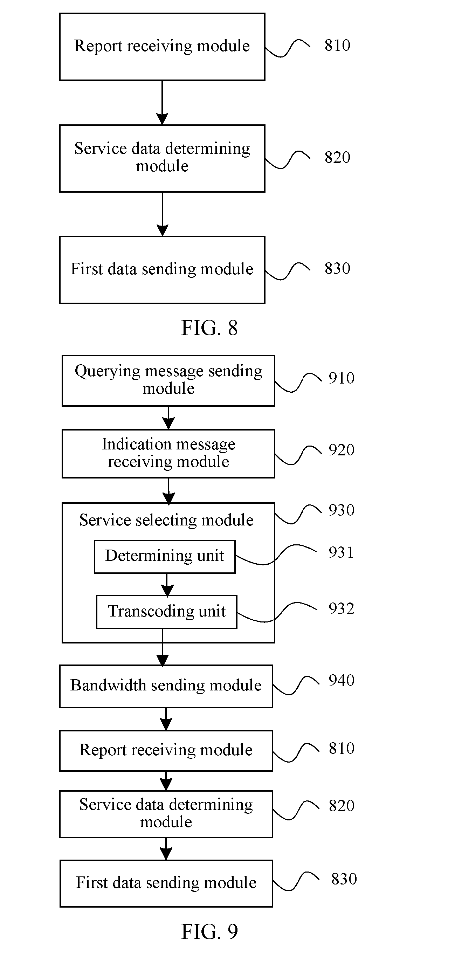

FIG. 8 is a schematic structural diagram of an apparatus for wireless transmission of service data according to Embodiment 8 of the present invention. The apparatus in this embodiment may be configured to execute the technical solutions of the method for wireless transmission of service data provided in the embodiments of the present invention. The apparatus in this embodiment specifically includes: a report receiving module 810, a service data determining module 820, and a first data sending module 830. The report receiving module 810 is configured to receive a bandwidth information report sent by a base station, where the bandwidth information report carries a service bandwidth that is admissible to the base station; the service data determining module 820 is configured to determine, according to the service bandwidth, service data that matches the service bandwidth; and the first data sending module 830 is configured to send the determined service data to the base station.

By using the foregoing modules, the apparatus in this embodiment implements the technical solutions of the method for wireless transmission of service data provided in the embodiments of the present invention, and for details, reference may be made to records in the related method embodiments in the foregoing, and details are not described herein again.

In this embodiment, a service optimization gateway is deployed on a network side, to provide requested service data, and a base station identifies, according to prediction of a capability of the base station, the requested service data that can ensure smooth implementation of a service, for example, a video playback pause caused when there is excessively little content in a buffer of user equipment during a video playback process can be avoided, thereby achieving improvement of user experience of a service.

### Embodiment 9

FIG. 9 is a schematic structural diagram of an apparatus for wireless transmission of service data according to Embodiment 9 of the present invention. As shown in FIG. 9, on a basis of the foregoing embodiment, preferably, the apparatus may further include: a querying message sending module 910 and an indication message receiving module 920, where the querying message sending module 910 is configured to send, before the indication message receiving module, a bandwidth report capability querying message to the base station, to detect whether the base station supports the bandwidth information report; and the indication message receiving module 920 is configured to receive a message, which indicates whether the bandwidth information report is supported, fed back by the base station.

By using the foregoing modules, the apparatus in this embodiment implements the technical solutions of the method for wireless transmission of service data provided in the embodiments of the present invention, and for details, reference may be made to records in the related method embodiments in the foregoing, and details are not described herein again.

In this embodiment, a service optimization gateway is deployed on a network side, to provide requested service data, and a base station identifies, according to prediction of a capability of the base station, the requested service data that can ensure smooth implementation of a service, for example, a video playback pause caused when there is excessively little content in a buffer of user equipment during a video playback process can be avoided, thereby achieving improvement of user experience of a service.

On a basis of the above, preferably, the service data determining module is specifically configured to: determine a service bit rate or bit rate range according to the service bandwidth, and determine service data that matches the service bit rate or bit rate range.

On a basis of the above, the apparatus may further include: a service selecting module 930, configured to select, before the report receiving module, candidate service data according to a service data request message sent by user equipment, where the candidate service data includes at least two bit rate versions of the requested service data.

On a basis of the above, preferably, the service selecting module 930 includes: a determining unit 931 and a transcoding unit 932, where the determining unit 931 is configured to configured to determine whether the service data requested by the service data request message is buffered in a service optimization gateway, and if the service data is not buffered in the service optimization gateway, acquire the service data from an original server in which the service data is located; and the transcoding unit 932 is configured to transcode the service data acquired from a cache of the service optimization gateway or from the original server into the at least two different bit rate versions and use the at least two different bit rate versions as the candidate service data.

On a basis of the above, preferably, the apparatus may further include: a bandwidth sending module 940, configured to send, after the service selecting module, at least one service bandwidth needed by each of the candidate service data to the base station; or configured to divide, after the service selecting module, each of the candidate service data into at least two service fragments, and send service bandwidths needed by the service fragments to the base station.

On a basis of the above, the service data determining module 820 may be specifically further configured to select, according to the service bandwidth, from the candidate service data of the at least two bit rate versions of the requested service data, a bit rate version that matches the service bandwidth and a size of the requested service data buffered in the current user equipment.

In the embodiments above, the service data may be video data, or may be audio data, which is not limited herein.

### Embodiment 10

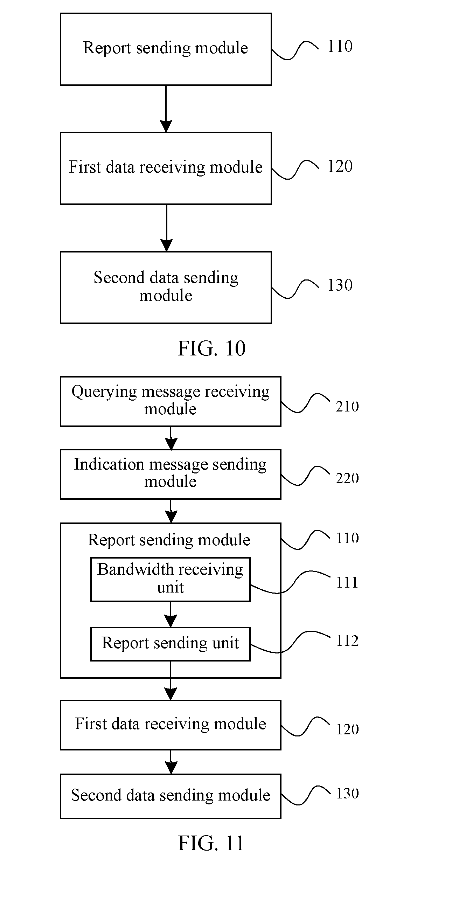

FIG. 10 is a schematic structural diagram of an apparatus for wireless transmission of service data according to Embodiment 10 of the present invention. The apparatus in this embodiment may be configured to execute the technical solutions of the method for wireless transmission of service data provided in the embodiments of the present invention. The apparatus in this embodiment specifically includes: a report sending module 110, a first data receiving module 120, and a second data sending module 130. The report sending module 110 is configured to send a bandwidth information report to a service optimization gateway according to load information of a base station, where the bandwidth information report carries a service bandwidth that is admissible to the base station, so that the service optimization gateway determines, according to the service bandwidth, service data that matches the service bandwidth; the first data receiving module 120 is configured to receive the service data, which matches the service bandwidth, sent based on the service bandwidth by the service optimization gateway; and the second data sending module 130 is configured to send the service data to user equipment.

By using the modules, the apparatus in this embodiment implements the technical solutions of the method for wireless transmission of service data provided in the embodiments of the present invention, and for details, reference may be made to records in the related method embodiments in the foregoing, and details are not described herein again.

In this embodiment, a service optimization gateway is deployed on a network side, to provide requested service data, and a base station identifies, according to prediction of a capability of the base station, the requested service data that can ensure smooth implementation of a service, for example, a video playback pause caused when there is excessively little content in a buffer of user equipment during a video playback process can be avoided, thereby achieving improvement of user experience of a service.

### Embodiment 11

FIG. 11 is a schematic structural diagram of an apparatus for wireless transmission of service data according to Embodiment 11 of the present invention. In this embodiment, on a basis of the foregoing technical solutions, preferably, the apparatus may further include: a querying message receiving module 210 and an indication message sending module 220, where the querying message receiving module 210 is configured to receive, before the report sending module, a bandwidth report capability querying message sent by the service optimization gateway, where the bandwidth report capability querying message is used to detect whether the base station supports the bandwidth information report; and the indication message sending module 220 is configured to feed back, after the querying message receiving module, a message indicating whether the base station supports the bandwidth information report to the service optimization gateway.

On a basis of the above, preferably, the report sending module 110 includes: a bandwidth receiving unit 111 and a report sending unit 112, where the bandwidth receiving unit 111 is configured to receive at least one service bandwidth required by the service optimization gateway for sending the service data; and the report sending unit 112 is configured to select at least one of the service bandwidth according to the load information of the base station, and feed back the bandwidth information report that carries the service bandwidth to the service optimization gateway, so that the service optimization gateway sends the service data to the base station based on the service bandwidth.

### Embodiment 12

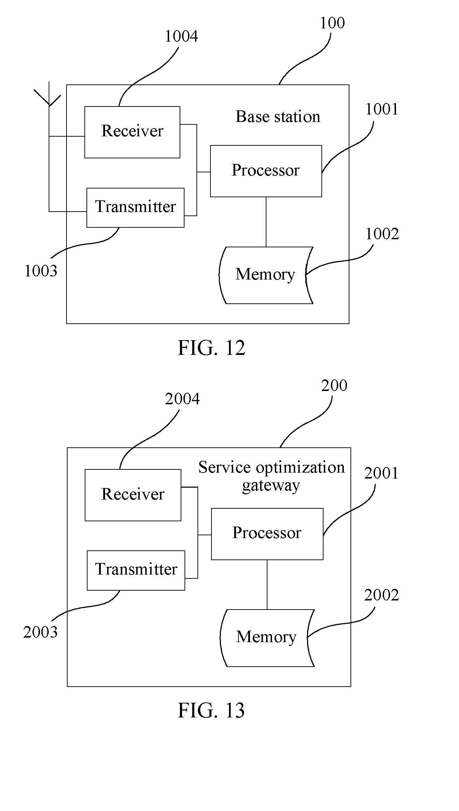

FIG. 12 is a schematic structural diagram of a base station according to Embodiment 12 of the present invention. As shown in FIG. 12, the base station 100 provided in this embodiment includes a processor 1001 and a memory 1002. The base station 100 may further include a transmitter 1003 and a receiver 1004. The transmitter 1003 and the receiver 1004 may be connected to the processor 1001. The memory 1002 stores an execution instruction, and when the base station 100 runs, the processor 1001 communicates with the memory 1002, and the processor 1001 invokes the execution instruction in the memory 1002, to perform the following operations:
sending a bandwidth information report to a service optimization gateway according to load information of a base station, where the bandwidth information report carries a service bandwidth that is admissible to the base station, so that the service optimization gateway determines, according to the service bandwidth, service data that matches the service bandwidth;
receiving the service data, which matches the service bandwidth, sent based on the service bandwidth by the service optimization gateway; and
sending the service data to user equipment.

Optionally, before the sending a bandwidth information report to a service optimization gateway according to load information of a base station, the operations further include:
receiving a bandwidth report capability querying message sent by the service optimization gateway, where the bandwidth report capability querying message is used to detect whether the base station supports the bandwidth information report.

Optionally, after the receiving a bandwidth report capability querying message sent by the service optimization gateway, the operations further include:
feeding back a message indicating whether the base station supports the bandwidth information report to the service optimization gateway.

Optionally, the sending a bandwidth information report to a service optimization gateway according to load information of a base station includes:
receiving at least one service bandwidth required by the service optimization gateway for sending the service data; and
selecting at least one of the service bandwidth according to the load information of the base station, and feeding back the bandwidth information report that carries the service bandwidth to the service optimization gateway, so that the service optimization gateway sends the service data to the base station based on the service bandwidth.

Optionally, the service data includes: video data or audio data.

The base station in this embodiment may be configured to execute the technical solutions of the method for wireless transmission of service data provided in any embodiment of the present invention, an implementation principle and a technical effect of the base station are similar thereto, and details are not described herein again.

### Embodiment 13

FIG. 13 is a schematic structural diagram of a service optimization gateway according to Embodiment 13 of the present invention. As shown in FIG. 13, the service optimization gateway 200 provided in this embodiment includes a processor 2001 and a memory 2002. The service optimization gateway may further include a transmitter 2003 and a receiver 2004. The transmitter 2003 and the receiver 2004 may be connected to the processor 2001. The memory 2002 stores an execution instruction, and when the service optimization gateway runs, the processor 2001 communicates with the memory 2002, and the processor 2001 invokes the execution instruction in the memory 2002, to perform the following operations:
receiving a bandwidth information report sent by a base station, where the bandwidth information report carries a service bandwidth that is admissible to the base station;
determining, according to the service bandwidth, service data that matches the service bandwidth; and
sending the determined service data to the base station.

Optionally, before the receiving a bandwidth information report sent by a base station, the operations further include:
receiving a message, which indicates whether the bandwidth information report is supported, fed back by the base station.

Optionally, before receiving a message, which indicates that the bandwidth information report is supported, fed back by the base station, the operations further include:
sending a bandwidth report capability querying message to the base station.

Optionally, the determining, according to the service bandwidth, service data that matches the service bandwidth includes:
determining a service bit rate or bit rate range according to the service bandwidth, and determining service data that matches the service bit rate or bit rate range.

Optionally, before the receiving a bandwidth information report sent by a base station, the operations further include:
selecting candidate service data according to a service data request message sent by user equipment, where the candidate service data includes at least two bit rate versions of the service data.

Optionally, the selecting candidate service data according to a service data request message sent by user equipment includes:
determining whether the service data requested by the service data request message is buffered in a service optimization gateway, and if the service data is not buffered in the service optimization gateway, acquiring the service data from an original server in which the service data is located; and
transcoding the service data acquired from a cache of the service optimization gateway or from the original server into the at least two bit rate versions, and using the at least two bit rate versions as the candidate service data.

Optionally, after the selecting candidate service data according to a service data request message sent by user equipment, the operations further include:
sending at least one service bandwidth needed by each of the candidate service data to the base station; or
dividing each of the candidate service data into at least two service fragments, and sending service bandwidths needed by the service fragments to the base station.

Optionally, the determining, according to the service bandwidth, service data that matches the service bandwidth includes:
selecting, according to the service bandwidth, from the candidate service data of the at least two bit rate versions of the service data, a bit rate version that matches the service bandwidth and a size of the service data buffered in the current user equipment.

Optionally, the service data includes: video data or audio data.

The service optimization gateway in this embodiment may be configured to execute the technical solutions of the method for wireless transmission of service data provided in any embodiment of the present invention, an implementation principle and a technical effect of the service optimization gateway are similar thereto, and details are not described herein again.

In any embodiment of the present invention, the service data may be video data, or may be audio data, or may be service data of another type, which is not limited herein.

In the several embodiments provided in the present application, it should be understood that the disclosed device and method may be implemented in other manners. For example, the described device embodiment is merely exemplary. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented by using some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual requirements to achieve the objectives of the solutions of the embodiments.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for wireless transmission of service data, comprising:
receiving a bandwidth information report sent by a base station, wherein the bandwidth information report carries a service bandwidth that is admissible to the base station;
determining, according to the service bandwidth, service data that matches the service bandwidth; and
sending the determined service data to the base station.

2. The method according to claim 1, before the receiving a bandwidth information report sent by a base station, further comprising:
receiving a message, which indicates whether the bandwidth information report is supported, fed back by the base station.

3. The method according to claim 2, before receiving a message, which indicates that the bandwidth information report is supported, fed back by the base station, further comprising:
sending a bandwidth report capability querying message to the base station, to detect whether the base station supports the bandwidth information report.

4. The method according to claim 1, wherein the determining, according to the service bandwidth, service data that matches the service bandwidth comprises:
determining a service bit rate or bit rate range according to the service bandwidth, and determining service data that matches the service bit rate or bit rate range.

5. The method according to claim 4, before the receiving a bandwidth information report sent by a base station, further comprising:
selecting candidate service data according to a service data request message sent by user equipment, wherein the candidate service data comprises at least two bit rate versions of the service data.

6. The method according to claim 5, wherein the selecting candidate service data according to a service data request message sent by user equipment comprises:
determining whether the service data requested by the service data request message is buffered in a service optimization gateway, and if the service data is not buffered in the service optimization gateway, acquiring the service data from an original server in which the service data is located; and
transcoding the service data acquired from a cache of the service optimization gateway or from the original server into the at least two bit rate versions, and using the at least two bit rate versions as the candidate service data.

7. The method according to claim 5 or 6, after the selecting candidate service data according to a service data request message sent by user equipment, further comprising:
sending at least one service bandwidth needed by each of the candidate service data to the base station; or
dividing each of the candidate service data into at least two service fragments, and sending service bandwidths needed by the service fragments to the base station.

8. The method according to claim 5, wherein the determining, according to the service bandwidth, service data that matches the service bandwidth comprises:
selecting, according to the service bandwidth, from the candidate service data of the at least two bit rate versions of the service data, a bit rate version that matches the service bandwidth and a size of the service data buffered in the current user equipment.

9. The method according to any one of claims 1 to 8, wherein the service data comprises:
video data or audio data.

10. A method for wireless transmission of service data, comprising:
sending a bandwidth information report to a service optimization gateway according to load information of a base station, wherein the bandwidth information report carries a service bandwidth that is admissible to the base station, so that the service optimization gateway determines, according to the service bandwidth, service data that matches the service bandwidth;
receiving the service data, which matches the service bandwidth, sent based on the service bandwidth by the service optimization gateway; and
sending the service data to user equipment.

11. The method according to claim 10, before the sending a bandwidth information report to a service optimization gateway according to load information of a base station, further comprising:
receiving a bandwidth report capability querying message sent by the service optimization gateway, wherein the bandwidth report capability querying message is used to detect whether the base station supports the bandwidth information report.

12. The method according to claim 11, after the receiving a bandwidth report capability querying message sent by the service optimization gateway, further comprising:
feeding back a message indicating whether the base station supports the bandwidth information report to the service optimization gateway.

13. The method according to claim 10, wherein the sending a bandwidth information report to a service optimization gateway according to load information of a base station comprises:
receiving at least one service bandwidth required by the service optimization gateway for sending the service data; and
selecting at least one of the service bandwidth according to the load information of the base station, and feeding back the bandwidth information report that carries the service bandwidth to the service optimization gateway, so that the service optimization gateway sends the service data to the base station based on the service bandwidth.

14. The method according to any one of claims 10 to 13, wherein the service data comprises:
video data or audio data.

15. An apparatus for wireless transmission of service data, comprising:
a report receiving module, configured to receive a bandwidth information report sent by a base station, wherein the bandwidth information report carries a service bandwidth that is admissible to the base station;
a service data determining module, configured to determine, according to the service bandwidth, service data that matches the service bandwidth; and
a first data sending module, configured to send the determined service data to the base station.

16. The apparatus according to claim 15, further comprising:
an indication message receiving module, configured to receive a message, which indicates whether the bandwidth information report is supported, fed back by the base station.

17. The apparatus according to claim 16, further comprising:
a querying message sending module, configured to send, before the indication message receiving module, a bandwidth report capability querying message to the base station, to detect whether the base station supports the bandwidth information report.

18. The apparatus according to claim 15, wherein the service data determining module is specifically configured to: determine a service bit rate or bit rate range according to the service bandwidth, and determine service data that matches the service bit rate or bit rate range.

19. The apparatus according to claim 18, further comprising:
a service selecting module, configured to select, before the report receiving module, candidate service data according to a service data request message sent by user equipment, wherein the candidate service data comprises at least two bit rate versions of the service data.

20. The apparatus according to claim 19, wherein the service selecting module comprises:
a determining unit, configured to determine whether the service data requested by the service data request message is buffered in a service optimization gateway, and if the service data is not buffered in the service optimization gateway, acquire the service data from an original server in which the service data is located; and
a transcoding unit, configured to transcode the service data acquired from a cache of the service optimization gateway or from the original server into the at least two bit rate versions, and use the at least two bit rate versions as the candidate service data.

21. The apparatus according to claim 19 or 20, further comprising:
a bandwidth sending module, configured to send, after the service selecting module, at least one service bandwidth needed by each of the candidate service data to the base station; or
a bandwidth sending module, configured to divide, after the service selecting module, each of the candidate service data into at least two service fragments, and send service bandwidths needed by the service fragments to the base station.

22. The apparatus according to claim 19, wherein the service data determining module is further configured to select, according to the service bandwidth, from the candidate service data of the at least two bit rate versions of the service data, a bit rate version that matches the service bandwidth and a size of the service data buffered in the current user equipment.

23. The apparatus according to any one of claims 15 to 22, wherein the service data comprises: video data or audio data.

24. An apparatus for wireless transmission of service data, comprising:
a report sending module, configured to send a bandwidth information report to a service optimization gateway according to load information of a base station, wherein the bandwidth information report carries a service bandwidth that is admissible to the base station, so that the service optimization gateway determines, according to the service bandwidth, service data that matches the service bandwidth;
a first data receiving module, configured to receive the service data, which matches the service bandwidth, sent based on the service bandwidth by the service optimization gateway; and
a second data sending module, configured to send the service data to user equipment.

25. The apparatus according to claim 24, further comprising:
a querying message receiving module, configured to receive, before the report sending module, a bandwidth report capability querying message sent by the service optimization gateway, wherein the bandwidth report capability querying message is used to detect whether the base station supports the bandwidth information report.

26. The apparatus according to claim 25, further comprising:
an indication message sending module, configured to feed back, after the querying message receiving module, a message indicating whether the base station supports the bandwidth information report to the service optimization gateway.

27. The apparatus according to claim 24, wherein the report sending module comprises:
a bandwidth receiving unit, configured to receive at least one service bandwidth required by the service optimization gateway for sending the service data; and
a report sending unit, configured to select at least one of the service bandwidth according to the load information of the base station, and feed back the bandwidth information report that carries the service bandwidth to the service optimization gateway, so that the service optimization gateway sends the service data to the base station based on the service bandwidth.

28. The apparatus according to any one of claims 24 to 27, wherein the service data comprises: video data or audio data.

29. A service optimization gateway, comprising: a processor and a memory, wherein the memory stores an execution instruction; and when the service optimization gateway runs, the processor communicates with the memory, and the processor executes the execution instruction to enable the service optimization gateway to perform the method according to any one of claims 1 to 9.

30. A base station, comprising a processor and a memory, wherein the memory stores an execution instruction; and when the base station runs, the processor communicates with the memory, and the processor executes the execution instruction to enable the base station to perform the method according to any one of claims 10 to 14.
